# EUROPÄISCHE PATENTSCHRIFT

(11) **EP 0 755 850 B1**
(45) Veröffentlichungstag und Bekanntmachung des Hinweises auf die Patenterteilung: **17.03.1999**
(21) Anmeldenummer: 95120138.3
(22) Anmeldetag: 20.12.1995
(51) Int. Cl.: B62J 6/04

(54) **Leuchtvorrichtung für Rücklichter**
Rear light device
Dispositif de feu arrière

(30) Priorität: 25.07.1995 DE 19527168
(43) Veröffentlichungstag der Anmeldung: 29.01.1997
(73) Patentinhaber: Bodenstedt, Robert, 86567 Hilgertshausen (DE)
(72) Erfinder: Bodenstedt, Robert, D-86567 Hilgerthausen (DE); Rosenbaum, Gunter, D-73434 Aalen (DE)
(74) Vertreter: Liesegang, Roland, Dr.-Ing.

(56) Entgegenhaltungen:
- EP-A- 0 362 993
- DE-A- 3 832 109
- DE-A- 4 224 061
- PATENT ABSTRACTS OF JAPAN vol. 012, no. 125 (P-691), 19.April 1988 & JP 62 249012 A (TOYODA GOSEI CO LTD), 30.Oktober 1987,

## Beschreibung

Die vorliegende Erfindung betrifft eine Leuchtvorrichtung mit einer Leuchtdiode als Lichtquelle, welche insbesondere für den Einbau in ein Fahrradrücklicht oder eine Schlußleuchte eines KFZs vorgesehen ist.

Bisher werden Fahrradrücklichter in der Regel mit einer Glühbirne ausgestattet, deren Licht mittels Spiegelreflektoren und einer speziellen Linsenoptik oder einer Rippenoptik in der transparenten Abdeckkappe des Rücklichtes derart ausgerichtet (abgelenkt oder gebündelt) wird, daß eine geeignete Helligkeit des Rücklichtes erzielt wird und daß insbesondere die Richtlinien der Straßenverkehrszulassungsordnung (StVZO §§ 67, 22, 20) und der Technischen Aufsichtsbehörde (TA Nr. 14) eingehalten werden. Als Spannungsquelle dient in der Regel ein Dynamo.

Es sind ferner LED-Rücklichter bekannt, weiche aus mehreren Leuchtdioden (beispielsweise vier LEDs) aufgebaut sind, Reflektoren und eine aufwendige elektronische Schaltung benötigen, um die oben angesprochenen Richtlinien der StVZO und der TA zu erfüllen, welche insbesondere die Helligkeitsverteilung betreffen. Es ist z.B. eine Leuchtvorrichtung für ein Fahrradschlußlicht bekannt, die mindestens zwei LEDs verwendet, von denen eine so eingebaut wird, daß sie einen zur Leuchtrichtung des Fahrradschlußlichtes entgegengesetzten Lichtkegel erzeugt, der mittels einer aufwendigen Spiegeloptik umgelenkt wird, um die nach der StVZO erforderliche Lichtverteilung zu erreichen. Ferner ist es bekannt, den Lichtkegel einer Leuchtdiode durch Strahlenteilung aufzuweiten, um eine gewünschte Lichtverteilung zu erzielen. Aufgrund ihres speziellen Aufbaus können diese LED-Vorrichtungen nicht in bereits vorhandene Fahrradrücklichter eingebaut werden.

Aus der EP-A-0 362 993 ist eine Leuchtdiode zur Verwendung in einem Kfz-Bremslicht bekannt, die derart in einen konischen Sockel integriert ist, daß ihre Mantelfläche nur im Abstrahlwinkel der Leuchtdiode freiliegt. Mit dieser Leuchtdiode wird eine Lambertsche Lichtverteilung erreicht, d.h. eine richtungsunabhängige gleichmäßige Strahlungsdichte. Zusätzlich kann die freiliegende Oberfläche der Leuchtdiode mattiert oder beschichtet sein, um das abgestrahlte Licht noch besser an eine Lambertsche Lichtverteilung anzupassen.

Die herkömmlichen Fahrradrücklichter, welche als Leuchtmittel eine Glühbirne verwenden, haben die folgenden Nachteile. Der Glühwendel kann durch Erschütterung relativ leicht zerbrechen, und die Lebensdauer der Glühbirne ist entsprechend kurz, weshalb die Rücklichter immer so gestaltet sein müssen, daß die Glühbirne austauschbar ist. Durch produktionsbedingte unterschiedliche Höhen der Glühwendel in der Glühbirne und eine ungenaue Positionierung der eingeschraubten oder gesteckten Glühbirne werden breitstreuende Lichtwerte erhalten, und eine aufwendige Sekundäroptik, mit Spiegelreflektoren und dergleichen, ist notwendig, um eine ausreichende Beleuchtung zu erhalten. Schließlich ist die Helligkeit der Glühbirne von der Fahrtgeschwindigkeit abhängig und nimmt bei langsamer Fahrt stark ab, so daß nicht in jedem Fall eine ausreichende Verkehrssicherheit gewährleistet wird.

Obwohl die LED-Rücklichter bereits einige dieser Nachteile vermeiden, erfordern die bekannten LED-Anordnungen, ebenso wie die Glühbirnen, eine relativ aufwendige Sekundäroptik (Reflektoren, spezielle Gestaltung der Abdeckkappe) und zusätzlich einen großen Schaltungsaufwand, so daß die LED-Rücklichter bisher keine akzeptable Alternative zu den bekannten Fahrradrücklichtern mit Glühbirne bieten.

Es ist daher eine Aufgabe der vorliegenden Erfindung eine Leuchtvorrichtung, insbesondere für ein Fahrradrücklicht, anzugeben, welche zuverlässig eine ausreichende Lichtstärke abgibt, keine kostenintensive Sekundäroptik, wie Spiegelreflektoren und dgl., benötigt und wartungsfrei bzw. wartungsarm ist. Vorzugsweise soll die erfindungsgemäße Leuchtvorrichtung auch in bereits bestehende Rücklichter, die bisher eine einfache Glühbirne verwendeten, einbaubar sein.

Diese Aufgabe wird erfindungsgemäß durch eine Leuchtvorrichtung, insbesondere für Fahrradrücklicht, mit einer Leuchtdiode als Lichtquelle gelöst, bei der ein Bereich der Manteloberfläche der Leuchtdiode helligkeitsvermindernd behandelt ist und die unbehandelte Leuchtdiode eine Helligkeit über einem vorgegebenen Helligkeitswert aufweist. Alternativ kann zur Verminderung der Helligkeit der Leuchtdiode eine mattierte Abdeckung über der Leuchtdiode angeordnet werden.

Erfindungsgemäß kann die Glühbirne des Fahrradrücklichtes durch eine einzige behandelte Leuchtdiode ersetzt werden, die ohne Spiegelreflektoren eine ausreichend große Helligkeit und Bündelung des Lichtes gewährleistet. Gemäß einer zweiten Lösungsvariante kann eine herkömmliche Leuchtdiode in Verbindung mit einer helligkeitsvermindernd behandelten Leuchtdiodenabdeckung eingesetzt werden, um dieselbe Wirkung zu erzielen. Die Leuchtdiodenabdeckung darf dabei nur einen geringen Abstand zur Leuchtdiode, in der Regel zwischen 0 und 1 mm, aufweisen.

Die vorliegende Erfindung wurde durch die Weiterentwicklung von Leuchtdioden möglich, wobei heute Leuchtdioden mit großer Helligkeitsreserve erhältlich sind, deren Helligkeit sogar über dem zulässigen Bereich gemäß den Richtlinien der StVZO und der TA liegt. Die verfügbaren Leuchtdioden an sich weisen jedoch nicht die geforderte Abstrahlcharakteristik - Helligkeit und räumliche Lichtverteilung - auf. Durch Behandeln der Manteloberfläche der Leuchtdiode mit großer Helligkeitsreserve kann erfindungsgemäß eine Leuchtvorrichtung geschaffen werden, welche im Vergleich zu Leuchtvorrichtungen mit Glühbirnen nur einen minimalen Herstellungsaufwand erfordert und gleichwohl die Richtlinien der Straßenverkehrszulassungsordnung StVZO §§ 20, 22, 67 und der Technischen Aufsichtsbehörde (TA Nr. 14) einhält.

Die gemäß einer bevorzugten Ausführungsform der Erfindung verwendete Leuchtdiode hat im Bereich von ± 5°, gemessen vom LED-Chip, relativ zu der Mittelachse (Nullachse) der Leuchtdiode, eine Helligkeit von 20 cd. Die von der TA vorgegebene Maximalhelligkeit in diesem Winkel beträgt 12 cd.

Durch Behandeln der Manteloberfläche der Leuchtdiode auf eine die Helligkeit der Leuchtdiode vermindernde Weise, insbesondere durch Anschleifen bzw. Mattieren eines bestimmten Bereichs des Kegelmantels, dessen Größe durch den Abstrahlwinkel der Leuchtdiode bestimmt wird, kann die überschüssige Helligkeit in diesem Bereich vermindert (< 12 cd) und zum Teil nach hinten und seitlich reflektiert werden, so daß die Abstrahlcharakteristik der LED gezielt beeinflußt wird, um einen Helligkeitswert innerhalb eines vorgegebenen Helligkeitsbereiches zu erzielen.

Durch das Mattieren der Leuchtdiode wird nicht nur die Helligkeit der Leuchtdiode in ihrem ursprünglich relativ engen Abstrahlbereich vermindert, sondern auch der Abstrahlwinkel gezielt erweitert. Die Intensität des Lichtes und die Größe des Abstrahlwinkels können durch den Grad und Umfang der Mattierung gezielt variiert werden.

Diese sehr einfache Lösung gemäß der vorliegenen Erfindung wird ohne externe Hilfsmittel, wie Spiegelreflektoren, welche einen wesentlichen Kostenfaktor bei der Rücklichtherstellung darstellen, oder kostspielige Formänderungen und Werkzeuge für den Kunststoffspritzguß der Abdeckkappe des Rücklichtes erreicht, indem lediglich der Mantel der Leuchtdiode in einem bestimmten Bereich mattiert wird. Dies wird vorzugsweise durch Aufrauhen oder Beschichten einer handelsüblichen Leuchtdiode erreicht. Eine für diese Erfindung geeignete Leuchtdiode kann jedoch auch mit integrierter Mattierung hergestellt, z.B. mit einem mattierten Mantel gegossen werden. Dies kann durch eine einfache Bearbeitung des Gießwerkzeuges erreicht werden, z.B. durch Sandstrahlen oder Glasperlen. Alternativ kann eine mattierte Abdeckung über der Leuchtdiode vorgesehen werden, um die Abstrahlcharakteristik der Leuchtdiode auf im wesentlichen dieselbe Weise zu gezielt zu verändern.

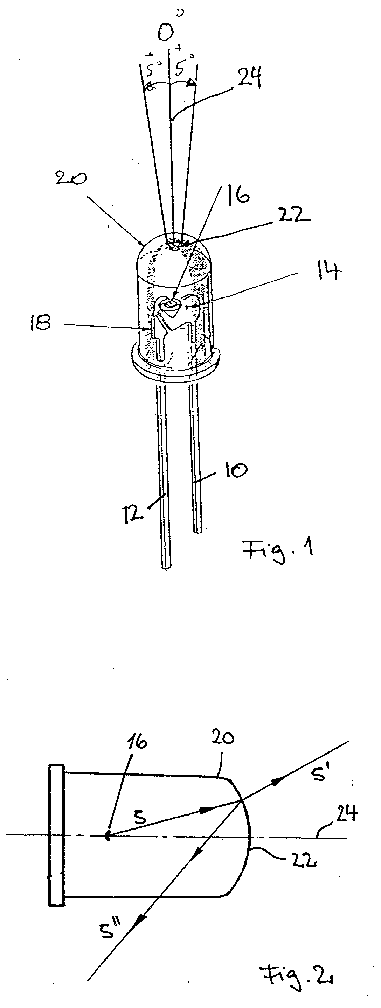

Ein Beispiel einer behandelten Leuchtdiode ist in Fig. 1 dargestellt. Sie umfaßt einen Kathodenanschluß 10, einen Anodenanschluß 12, einen Kathodenpfosten 14 mit einem Reflektorbecher, in dem ein LED-Chip 16 vorgesehen ist, einen Anodenpfosten 18 und einen domförmigen Mantel 20. Auf der Oberseite der Kuppel des domförmigen Mantels 20 ist der mattierte Bereich 22 angedeutet, der bei einem Winkel von etwa ± 5° relativ zu der Nullachse 24 liegt.

Das Anschleifen erfolgt mit einem speziellen Schleifwerkzeug, wobei die Form des Schleifkopfes von den Abmessungen der Leuchtdiode in axialer Richtung abhängt. Selbstverständlich kann die Helligkeit der LED auch auf eine andere, dem Fachmann geläufige Weise beeinflußt werden. Beispielsweise könnte gezielt ein Bereich der Manteloberfläche beschichtet werden, mit einer Folie beklebt werden oder dergleichen.

Die erfindungsgemäße Leuchtvorrichtung hat die folgenden Vorteile. Sie ist unempfindlich gegen Erschütterungen und hat somit eine höhere Lebensdauer als eine Glühbirne, so daß kein Austausch der LED notwendig wird, wodurch die Leuchtvorrichtung weitgehend wartungsfrei ist. Anstelle von vier Leuchtdioden, wie bei bekannten LED-Rücklichtern ist nur eine LED notwendig, die selbst ohne zusätzliche Spiegelreflektoren (Sekundäroptik) eine ausreichende Helligkeit hat. Die erfindungsgemäße Leuchtvorrichtung mit nur einer LED benötigt weniger Leistung als bekannte Fahrradrücklichter, und es genügt schon die Stromabgabe eines Dynamos bei Langsamfahrt für eine konstant gute Beleuchtung. Hieraus ergibt sich eine höhere Verkehrssicherheit bei einer gleichzeitigen Vereinfachung des Aufbaus der Leuchtvorrichtung sowie eine Kostenersparnis. Schließlich ist die Reproduzierbarkeit der Helligkeit der Leuchtvorrichtung gemäß der vorliegenden Erfindung wesentlich besser, da eine einzelne Leuchtdiode genau positioniert werden kann und konstante Helligkeitswerte hat. Insgesamt werden also mit einem einfacheren und kostengünstigeren Aufbau als beim Stand der Technik bessere Parameter hinsichtlich der Lebensdauer und Wartungsfreiheit sowie der Erzielung einer vorgegebenen und reproduzierbaren Helligkeit erreicht.

Die Leuchtvorrichtung gemäß der vorliegenden Erfindung weist bei einer besonders bevorzugten Ausführungsform eine stromgesteuerte Ansteuerschaltung auf, welche in Kombination mit der behandelten Leuchtdiode die Eigenschaften der Leuchtvorrichtung noch weiter verbessert.

Es hat sich gezeigt, daß aufgrund der Schwankungen der Durchlaßspannung einer Leuchtdiode je nach Fertigungslos (1,6 - 2,6 V) eine spannungsgesteuerte Ansternerschaltung für die Leuchtvorrichtung mit Leuchtdiode keine kostante Helligkeit ergibt. Für die erfindungsgemäße Leuchtvorrichtung, welche ohne Spiegelreflektor eine vorgegebene konstante Helligkeit erzielen soll, wird daher erfindungsgemäß die stromgesteuerte Ansteuerschaltung vorgesehen. Diese weist vorzugsweise eine Überstromschutzfunktion auf, welche auf einer Stromrückkopplung des Diodenstroms über eine Transistorschaltung basiert. Erfindungsgemäß wird ferner bei der momentan bevorzugten Ausführungsform ein Speicherkondensator, insbesondere ein Doppelschichtkondensator vorgesehen, welcher über den Dynamo oder eine andere Versorgungsquelle geladen wird und keinen Strom abgibt, solange die Leuchtdiode über den Dynamo oder eine andere Versorgungsquelle mit Energie versorgt wird. Durch diese "Entladesperre" für den Kondensator steht in dem Fall, daß die primäre Versorgungsquelle ausfällt, beispielsweise der Dynamo nicht mehr angetrieben wird, die volle Kapazität des Speicherkondensators zur Verfügung.

Die erfindungsgemäße Leuchtvorrichtung mit Leuchtdiode in Verbindung mit der stromgesteuerten Ansteuerschaltung kann erstmals zuverlässig mit nur einer Leuchtdiode die Richtwerte einhalten, welche von der StVZO und der TA für Fahrradrücklichter gefordert werden. Der Strombedarf der Schaltung ist geringer als bei vergleichbaren Produkten, und der Überstromschutz gewährleistet, daß bei Ausfall der Frontbeleuchtung des Fahrrades (Defekt der Glühbirne) die Dynamospannung, welche in der Regel zwischen 10 und 12 V liegt, das Rücklicht nicht gefährdet. In solchen Fällen brannte bisher die rückwärtige Glühbirne durch.

Die vorliegende Erfindung sieht ferner bei einer weiteren bevorzugten Ausführungsform eine Leuchtvorrichtung mit einer batteriegespeisten Ansteuerschaltung vor. Die Ansteuerschaltung umfaßt eine Stromregelung, welche bei abnehmender Batteriespannung der Strom nachregelt, so daß der Ansteuerstrom immer konstant ist und die Batteriekapazität voll ausgenutzt wird. Ferner kann erfindungsgemäß eine Batteriestandsanzeige vorgesehen sein, welche eine zweite Leuchtdiode ansteuert, wenn die Batteriespannung unter die Durchlaßspannung der ersten Leuchtdiode abfällt. Tatsächlich eignet sich die erfindungsgemäße Leuchtvorrichtung aufgrund ihres geringen Strombedarfs besonders gut für den Batteriebetrieb.

Insbesondere die batteriegespeiste Leuchtvorrichtung kann vorteilhaft auch für andere Anwendungen im und außerhalb des Straßenverkehrs eingesetzt werden. Sie kann beispielsweise in Warndreiecke oder andere Signaleinrichtungen integriert werden, welche Lasten oder dergleichen kenntlich machen. Sie ist als Sicherheitsbeleuchtung für Reiter, Fußgänger, Jogger u.s.w. oder als universelle Notbeleuchtung geeignet.

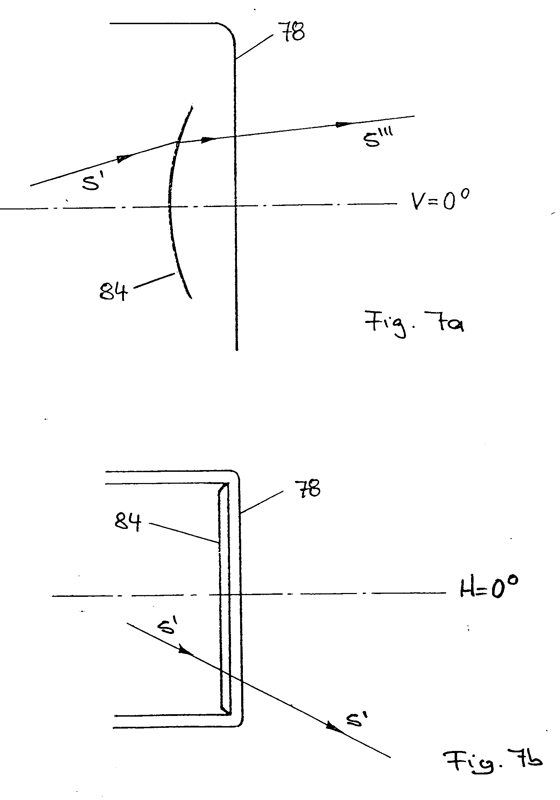

Gemäß einer besonders vorteilhaften Ausführungsform weist die erfindungsgemäße Leuchtvorrichtung eine spezielle Optik auf, die beispielsweise in eine Abdeckkappe eines Rücklichts integriert sein kann. Die Optik bewirkt eine Totalreflexion eines Teiles des von der Leuchtdiode abgegebenen Lichtes durch Überschreiten des Grenzwinkels der Totalreflexion ε_{g} (siehe Fig. 8). Die totalreflektierende Optik ist vorzugsweise an der Peripherie (z.B. oberhalb und unterhalb) einer der Leuchtdiode gegenüberliegenden Sammellinse angeordnet. Somit kann der Lichtkegel der Leuchtdiode zusätzlich zu der durch die Mattierung erzielten Wirkung nochmals gezielt beeinflußt werden.

Ein zusätzlicher Vorteil, der sich bei einer Leuchtvorrichtung mit einer Leuchtdiode gemäß der vorliegenden Erfindung ergibt, ist, daß durch die geringen Abmessungen der Leuchtdiode im Vergleich zu Glühbirnen und durch den Wegfall des bei anderen Schaltungen notwendigen Spiegelreflektors erstmals ein flacheres Design des Rücklichts möglich ist. Andererseits ist die neue Leuchtvorrichtung jedoch auch in bereits vorhandene Rücklichter einbaubar.

Die vorliegende Erfindung ist im folgenden anhand bevorzugter Ausführungsformen mit Bezug auf die Zeichnungen näher erläutert. In den Fig. zeigen:
- Fig. 1: eine perspektivische Darstellung einer behandelten Leuchtdiode nach der Erfindung,
- Fig. 2: eine schematische Darstellung der Lichtabstrahlung der Leuchtdiode von Fig. 1,
- Fig. 3: eine stromgesteuerte Ansteuerschaltung gemäß einer ersten Ausführungsform für eine erfindungsgemäße Leuchtvorrichtung,
- Fig. 4: eine stromgesteuerte Ansteuerschaltung mit Speichermitteln gemäß einer zweiten Ausführungsform für eine Leuchtvorrichtung nach der Erfindung und
- Fig. 5: eine batteriegespeiste Ansteuerschaltung gemäß einer dritten Ausführungsform für eine Leuchtvorrichtung nach der Erfindung,
- Fig. 6: eine schematische Darstellung eines vertikalen Schnitts durch ein Fahrradrücklicht mit der erfindungsgemäßen Optik,
- Fig. 7a und 7b: schematische Darstellungen der Lichtführung durch die Sammellinse der Optik von Figur 6 in Seitenansicht bzw. in Draufsicht, und
- Fig. 8: eine schematische Darstellung der Lichtführung durch das totalreflektierende Element der Optik von Figur 6 in Draufsicht.

Fig. 1 zeigt eine Ausführungsform einer behandelte Leuchtdiode, welche in der erfindungsgemäßen Leuchtvorrichtung eingesetzt wird. Die Leuchtdiode umfaßt einen Kathodenanschluß 10, einen Anodenanschluß 12, einen Kathodenpfosten 14 mit einem Reflektorbecher, in dem ein LED-Chip 16 vorgesehen ist, und einen Anodenpfosten 18, einen kuppel- oder domförmigen Mantel 20 und einen behandelten Bereich 22. Die unbehandelte LED hat, insbesondere in dem Abstrahlbereich von etwa ± 5° relativ zur Nullachse oder Mittelachse 24, eine Helligkeit von ca. 20 cd. In den Richtlinien der TA ist für den Winkel von 0° eine Maximalhelligkeit für Fahrradrücklichter von 12 cd vorgegeben. Durch Behandeln der Manteloberfläche, insbesondere durch Anschleifen des angegebenen Abstrahlbereiches, wird die Manteloberfläche in diesem Bereich mattiert und dadurch die Helligkeit der Leuchtdiode auf höchstens die vorgegebene Maximalhelligkeit vermindert. Gleichzeitig wird durch die Mattierung bewirkt, daß ein Teil des Lichtes seitlich und nach hinten reflektiert wird, wodurch sich überraschenderweise ergibt, daß mit der neuartigen Leuchtdiode, welche an sich eine zu hohe Helligkeit für ein Fahrradrücklicht aufweist, die Anforderungen an die räumliche Lichtverteilung sowohl im Bereich von ± 5° relativ zur Mittelachse als auch im seitlichen Abstrahlbereich eingestellt und eingehalten werden können.

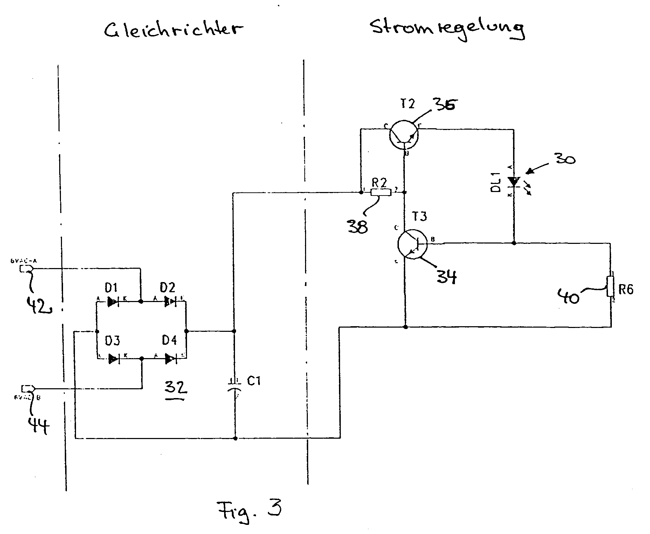

Fig. 2 zeigt schematisch den Verlauf der Lichtstrahlung S bei einer erfindungsgemäß behandelten, insbesondere mattierten Leuchtdiode 30. Der von dem LED-Chip 16 abgegebene Lichtstrahl S trifft in dem behandelten Bereich 22 auf den Mantel 20 der Leuchtdiode auf. Der konstruktiv bedingt relativ kleine Abstrahlwinkel α wird, wie in Fig. 2 gezeigt, zu dem Strahl S' aufgeweitet. Ferner wird dann, wenn der Strahldurchgang durch den Mantel 20 nicht im Winkel von 90° erfolgt, ein Teil der Strahlung reflektiert, S'', wodurch der Lichtkegel nach oben und zur Seite hin verstärkt wird.

Die beschriebene Wirkung wird durch die sehr einfache, gleichwohl wirkungsvolle Mattierung erzielt, sie kann ohne die bei Rücklichter bisher üblichen Spiegelreflektoren ereicht werden, und es ist hierfür auch keine Modifizierung der bisher verwendeten Abdeckkappen für Rücklichter notwendig, so daß die Leuchtvorrichtung gemäß der Erfindung leicht in vorhandene Rücklichter eingebaut werden kann.

Mit der erfindungsgemäßen Leuchtvorrichtung wird das bisher bestehende Vorurteil überwunden, daß zur Erzielung einer ausreichenden Helligkeit für ein Fahrradrücklicht eine Glühbirne oder eine Anordnung von mehreren, insbesondere vier Leuchtdioden notwendig ist.

Die folgende Tabelle gibt Mindestwerte der StVZO und bei einer tatsächlichen Ausführungsform der erfindungsgemäßen Leuchtvorrichtung gemessene Werte der Lichtstärke (in mcd) abhängig vom Abstrahlwinkel bei einer Meßentfernung von 2 m an. Die Anordnung hat keinen Spiegelreflektor.

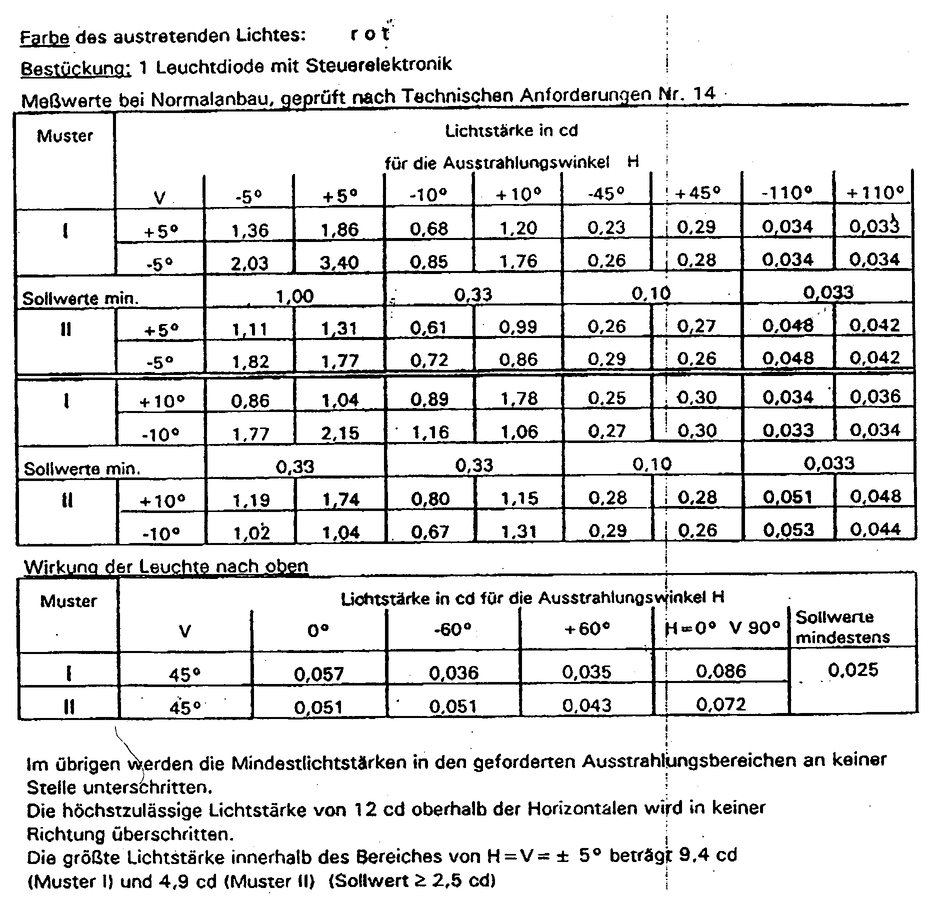

| Muster | Lichtstärke in mcd für die Ausstrahlungswinkel H²⁾ | | | | | | | |
|---|---|---|---|---|---|---|---|---|
| | V¹⁾ | -110° | -45° | -10° | 0° | +10° | +45° | +110° |
| **I** | +10° | 6,8 | 67,2 | 349 | 332 | 392 | 82,4 | 6,4 |
| | 0° | 5,6 | 67,6 | 256 | 2464 | 467 | 76,8 | 6,0 |
| | -10° | 6,4 | 77,2 | 306 | 518 | 222 | 84,4 | 7,2 |
| **II** | +10° | 14,4 | 81,2 | 356 | 488 | 364 | 84,4 | 12,0 |
| | 0° | 13,2 | 74,7 | 189 | 1238 | 333 | 80,4 | 10,0 |
| | -10° | 14,8 | 72,8 | 187 | 414 | 485 | 80,0 | 12,4 |
| Sollwerte mindestens | | 5 | 50 | 150 | | | 50 | 5 |

| | | | | | | | | |
|---|---|---|---|---|---|---|---|---|
| 1) V = vertikal | | | | | | | | |
| 2) H = horizontal | | | | | | | | |

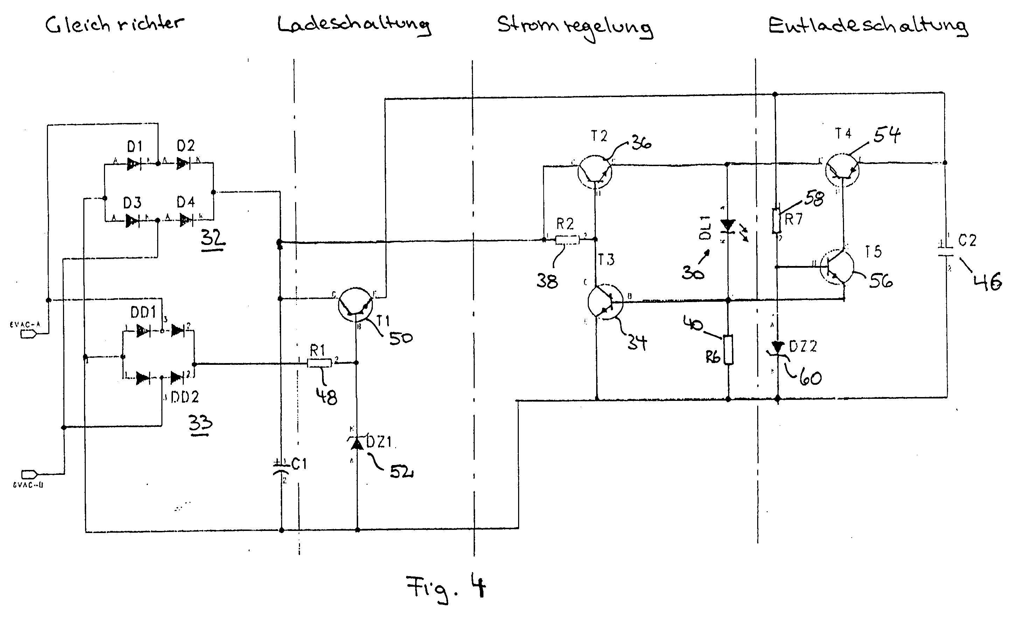

Die Leuchtvorrichtung gemäß der vorliegenden Erfindung erzielt die gewünschte Lichtverteilung mit einer Stromsteuerschaltung nach einer der Fig. 3 bis 5. Dabei muß beachtet werden, daß die Leistungsabgabe eines Fahrraddynamos für ein Rücklicht nicht konstant ist, daß aber dennoch eine konstante räumliche Lichtverteilung innerhalb vorgegebener Bereiche für die Helligkeit erzielt werden soll.

Die Ansteuerschaltung gemäß einer ersten Ausführungsform ist in Fig. 3 gezeigt. Die gezeigte Schaltung umfaßt eine Leuchtdiode (DL1) 30, einen Gleichrichter 32, der aus vier Dioden (D1, D2, D3, D4) und einem Kondensator (C1) aufgebaut ist, einen ersten Transistor (T3) 34, einen zweiten Transistor (T2) 36, und einen ersten (R2) und einen zweiten (R6) Widerstand 38 bzw. 40. An die Anschlüsse 42 und 44 der Ansteuerschaltung wird die Ausgangsspannung eines Dynamos oder einer anderen Wechselspannungsversorgung mit einer Ausgangsleistung von ca. 6 VA angelegt.

Die stromgesteuerte Ansteuerschaltung der Leuchtvorrichtung nach der Erfindung arbeitet wie folgt. Die Stromregelung basiert auf einer selbststeuernden Stromrückkopplung des Dioden-stromes durch die Leuchtdiode 30 über die Basis-Emitterspannung des Transistors T3 34. Der Strom durch die Leuchtdiode 30 wird über die Widerstände R2 38 und R6 40 eingestellt. Eine Zunahme des Stromes durch die Leuchtdiode bewirkt eine Erhöhung des Stromes durch den Widerstand R6 40, gefolgt von einer Spannungszunahme am Widerstand R6 40. Diese Spannungserhöhung bewirkt, daß der Transistor T3 34 leitend wird und somit der Transistor T2 36 sperrt. Hieraus ergibt sich eine Abnahme des Stromes, welcher durch die Leuchtdiode 30 fließt, der Transistor T3 34 geht wieder in den Sperrzustand über und der Transistor T2 36 wird leitend, wodurch der Strom durch die Leuchtdiode 30 wieder zunimmt. Durch eine geeignete Dimensionierung der Widerstände R2 38 und R6 40 kann der Strom durch die Leuchtdiode 30 auf einen geeigneten konstanten Wert geregelt werden, welcher eine gleichmäßige, vorgegebene Helligkeit der Leuchtdiode erzielt und eine Überlastung und somit Gefährdung der Leuchtdiode durch zu hohen Strom und/oder zu hohe Spannung verhindert.

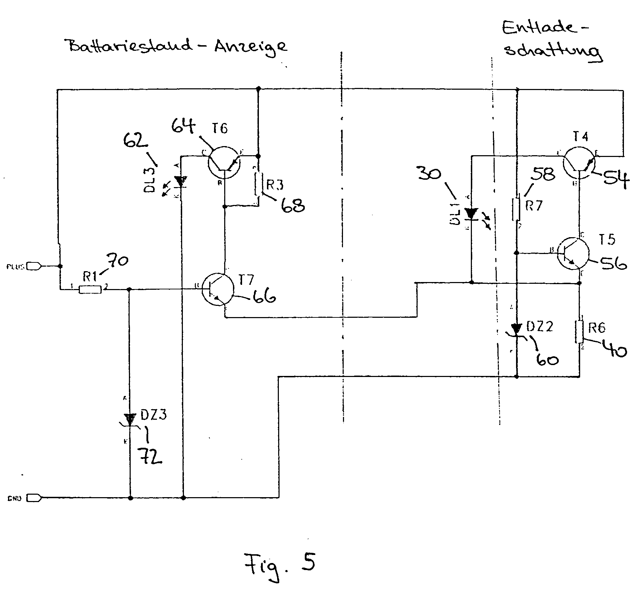

Die in Fig. 4 gezeigte Ansteuerelektronik sieht zusätzlich zu der Grundfunktion der Stromregelung eine Standlichtfunktion vor, welche es ermöglicht auch bei vollständigem Stillstand des Fahrrads, und somit des Dynamos, ein Standlicht zu betreiben.

Die erweiterte Schaltung umfaßt zusätzlich zu den in Fig. 3 gezeigten Bauteilen, welche in Fig. 4 mit denselben Bezugszeichen gekennzeichnet sind, einen Speicherkondensator (C2) 46, der als ein Doppelschichtkondensator ausgebildet ist, einen Ladeschaltungsabschnitt mit einem weiteren Gleichrichter zur Ansteuerung des Ladeschaltungsabschnittes und einen Entladeschaltungsabschnitt.

Der Ladeschaltungsabschnitt für den Speicherkondensator C2 umfaßt einen Widerstand (R1) 48, einen Transistor (T1) 50 und eine Zehnerdiode (DZ1) 52. Der Ausgang des weiteren Gleichrichters 33, welcher aus zwei Doppeldioden (DD1 und DD2) aufgebaut ist, ist mit der Basis des Transistors T1 50 verbunden, um diesen anzusteuern, wenn der Gleichrichter 33 eine positive Spannung abgibt. Wenn der Transistor T1 50 leitet, ist der Ausgang des Gleichrichters 32 mit dem Speicherkondensator C2 46 verbunden. Über die Ladeschaltung wird somit der Speicherkondensator C2 46 aufgeladen, wenn der Gleichrichter 33 eine positive Spannung abgibt, wobei bei einer nicht ausreichenden oder vollständig fehlenden Leistungsabgabe des Gleichrichters 33 der Transistor T1 50 sperrt, so daß sich der Speicherkondensator C2 46 nicht entladen kann.

Die erfindungsgemäße Entladeschaltung umfaßt einen Transistor (T4) 54 und einen Transistor (T5) 56 sowie einen Widerstand (R7) 58 und eine weitere Zehnerdiode (DZ2) 60, welche auf die gezeigte Weise angeschlossen sind. Wenn die Versorgungsspannung am Kondensator C4 46 und am Widerstand R7 58 anliegt, sperrt der Transistor T5 56, so daß der einmal aufgeladene Speicherkondensator C2 46 nicht über den Transistor T4 54, die Leuchtdiode 30 und den Widerstand R6 40 Strom abgeben kann und sich somit nicht entlädt. Die Spannung zwischen der Basis des Transistors T5 56 und Masse wird von der Zehnerdiode DZ2 60 als Klemmdiode bestimmt, und sie erreicht den Wert zum Durchschalten des Transistors T5 56 und somit des Transistors T4 54 nur, wenn keine Versorgungsspannung vom Dynamo geliefert wird. Mit der erfindungsgemäßen Entladeschaltung wird gewährleistet, daß erst bei vollständigem Stillstand des Fahrrads, d. h. wenn der Dynamo keine Leistung mehr abgibt, eine Ladung vom Kondensator C2 46 an die Leuchtdiode 30 abgegeben wird, welche dann als Standlicht arbeitet.

Mit dem Widerstand R7 58 wird die Entladecharakteristik des Kondensators C2 46, d.h. der Strom durch die Leuchtdiode 30 eingestellt. Die Einstellung erfolgt bei der bevorzugten Ausführungsform der Erfindung entsprechend den Anforderungen des Lichttechnischen Instituts Karlsruhe (LTIK) für eine rückwärtige Fahrrad-Standbeleuchtung mit Speicherkondensator und Leuchtdiode. Mit der erfindungsgemäßen Steuerschaltung werden die folgenden Werte erzielt.

Ausgehend von einem vollständig entladenen Speicherkondensator, bei einer Fahrgeschwindigkeit von 15 km/h beträgt die durch die Ladeschaltung und die Entladeschaltung verursachte Reduzierung der Dynamospannung nach 10 sec nicht mehr als 10 % und nach 2 min nicht mehr als 3 %. Nach einem 4-minütigem Betrieb ergibt sich eine Lichtstärkeverteilung der Standbeleuchtung, welche die folgenden Bedingungen erfüllt:

| Räumliche Lichtverteilung | | |
|---|---|---|
| Horizontal | Vertikal | Lichtstärke (Mindestwert) |
| 10° | 10° | 150 mcd |
| 45° | 10° | 50 mcd |
| 110° | 10° | 5 mcd |

Nach Abschalten des Dynamos werden bei der nachfolgenden Entladung des Speicherkondensators C2 46 über die Leuchtdiode 30 die folgenden Werte für die Abnahme der Lichtstärke im Abstrahlwinkel von 0° (Horizontal = Vertikal = 0°) eingehalten:
nach 1 min auf nicht weniger als 70 %,
nach 2 min auf nicht weniger als 50 %,
nach 4 min auf nicht weniger als 30 % des Anfangswertes.

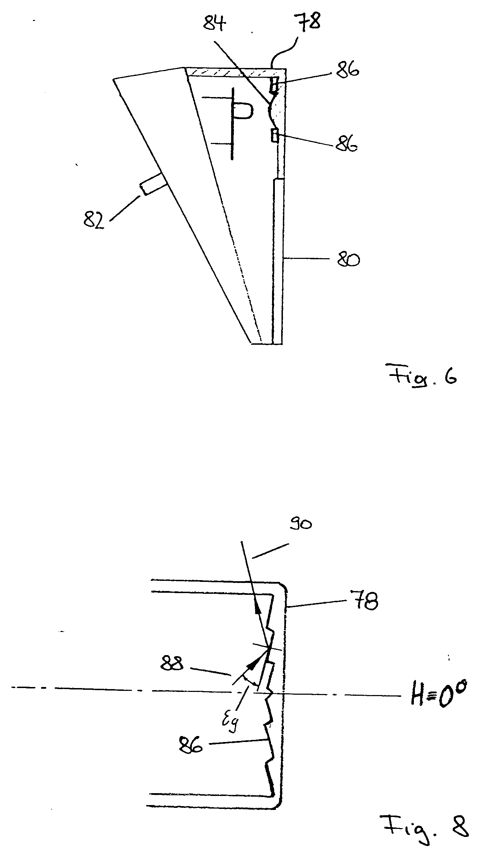

In Fig. 5 ist eine batteriegespeiste Ansteuerschaltung für die erfindungsgemäße Leuchtvorrichtung gezeigt. Die batteriegespeiste Ansteuerschaltung umfaßt im wesentlichen die bereits aus Fig. 4 bekannte Entladeschaltung, welche an den "+"- und den "-"-Pol einer Batterie oder eines Akkumulators mit einer Ausgangsspannung von etwa 2,4 bis 4 V angeschlossen wird. Zusätzlich ist eine Batteriestand-Anzeige vorgesehen, bestehend aus einer weiteren Leuchtdiode (DL3) 62, zwei Transistoren (T6, T7) 64 und 66, zwei Widerständen (R3, R1) 68 und 70 und einer weiteren Zehnerdiode (DZ3) 72, welche auf die in Fig. 5 gezeigte Weise miteinander verbunden sind.

Die batteriegespeiste Ansteuerschaltung für die erfindungsgemäße Leuchtvorrichtung nutzt auf besonders vorteilhafte Weise den geringen Strombedarf der Leuchtvorrichtung mit nur einer Leuchtdiode aus, so daß mit gleicher Batteriekapazität eine wesentlich längere Brenndauer erzielt wird als mit vergleichbaren Leuchtvorrichtungen für Fahrradrücklichter nach dem Stand der Technik. Ferner werden mit der erfindungsgemäßen batteriebetriebenen Leuchtvorrichtung die beschriebenen Anforderungen der StVZO und der TA eingehalten, wobei eine Batteriespannung von 2,5 V angenommen wurde (sh. obige Tabelle).

Die Batteriespannung wird über den Transistor T4 54 an die Anode der Leuchtdiode 30 angelegt. Der Diodenstrom fließt über den Transistor T4 54, die Leuchtdiode 30 und den Widerstand R640 gegen Masse. Die Zehnerdiode DZ2 60 dient als Klemmdiode für die Basis des Transistors T5 56 zu Masse. Gibt nun die Batterie eine größere Spannung als die Betriebsspannung der Leuchtdiode 30 ab, dann wird der Transistor T5 56 über den Widerstand R7 58 stärker durchgesteuert, und am Widerstand R6 40 fällt eine höhere Spannung ab, wodurch der Transistor T5 56 und somit der Transistor T4 54 teilweise sperren und dadurch den Strom durch die Leuchtdiode 30 begrenzen. Vermindert sich die Batteriespannung durch eine allmähliche Entladung, dann wird die Spannung am Widerstand R6 40 kleiner, wodurch der Transistor T5 56 und somit der Transistor T4 54 stärker leiten. Mit abnehmender Batteriespannung wird der Strom so nachgeregelt, daß die Leuchtdiode 30 immer einen konstanten Betriebsstrom erhält und die Batteriekapazität vollständig ausgenützt wird.

Liefert die Batterie eine Spannung, welche unter der Betriebsspannung bzw. Durchlaßspannung der Leuchtdiode 30 liegt, dann werden die als Richtwert vorgegebenen Helligkeitswerte unterschritten, welche die Leuchtdiode 30 bei einem Betrieb bei ihrer Durchlaßspannung erreicht. Die Spannung am Widerstand R6 40 nimmt ab, und der Transistor T7 66, welcher über den Widerstand R1 70 und die als Klemmdiode angeschlossene Zehnerdiode DZ3 72 vorgespannt ist, wird leitend. Demzufolge wird auch der Transistor T6 64 leitend und schaltet die Batteriespannung an die weitere Leuchtdiode DL3 62, wobei der durch die Leuchtdiode DL3 62 fließende Strom durch den Widerstand R3 68 bestimmt wird. Das Aufleuchten der weiteren Leuchtdiode DL3 62 zeigt also eine beinahe leere Batterie an und ermöglicht dem Benutzer der erfindungsgemäßen Leuchtvorrichtung, die Batterie rechtzeitig auszutauschen. Die Spannung, welche den Schwellwert für die Leeranzeige darstellt, wird über den Widerstand R1 70 eingestellt.

Fig. 6 zeigt schematisch eine Fahrradschlußleuchte, in die eine Ausführungsform der erfindungsgemäßen optischen Einrichtung integriert ist, im vertikalen schnitt. Die Fahrradschlußleuchte besteht aus einem Gehäuse 76, das z.B. aus schlagfestem Kunststoff hergestellt wird, einer lichtdurchlässigen Kappe 78 und einem Rückstrahler 80. Der Rückstrahler 80 ist mit der Kappe 78 wasserdicht verschweißt. Die Kappe 78 kann lösbar oder nicht lösbar an dem Gehäuse 76 befestigt sein. Das Schlußlicht wird mit geeigneten Befestigungsmitteln, beispielsweise einer Schraube 82, derart am hinteren Schutzblech oder einer anderen geeigneten Stelle eines Fahrrads befestigt, daß die Stirnfläche der Kappe 78 einen Winkel von etwa 90° zur vertikalen Achse (V = 0°) einhält.

In der folgenden Beschreibung beziehen sich die Angaben "vertikal" und "horizontal" auf eine Schlußleuchte in montiertem Zustand.

Die Kappe 78 weist eine sich horizontal und quer zur Fahrtrichtung erstreckende stabförmige Sammellinse 84 auf, welche der Leuchtdiode 30 gegenüberliegend angeordnet ist und das von der Leuchtdiode 30 ausgehende Licht vertikal bündelt. Der Abstrahlwinkel der Leuchtdiode 30 wird dabei in horizontaler Richtung nicht verändert. Die Wirkung der stabförmigen Sammellinse 84 ist in den Fig. 7a und 7b dargestellt, wobei Fig. 7a schematisch eine Seitenansicht der Sammellinse 84 zeigt, und Fig. 7b zeigt eine Draufsicht auf die Sammellinse 84. In den Figuren erkennt man, daß der aus der Leuchtdiode 30 austretende Lichtstrahl S' in vertikaler Richtung abgelenkt wird, so daß ein vertikal gebündelter Lichtstrahl S'' entsteht, während die stabförmige Sammellinse 84 den Lichtstrahl in horizontaler Richtung nicht verändert.

In Fig. 6 erkennt man, daß oberhalb und unterhalb der stabförmigen Sammellinse 84 jeweils ein optisches Element 86 vorgesehen ist, welches in Fig. 8 schematisch vergrößert, in horizontaler Richtung geschnitten dargestellt ist. Die optischen Elemente 86 bewirken eine im wesentlichen vollständige Reflexion der auftreffenden Strahlen (im folgenden auch als Totalreflexion bezeichnet).

Die reflektierende Wirkung der optischen Elemente 86 wird nicht mittels einer oder mehrerer verspiegelter Flächen erreicht, sondern durch eine besondere Oberflächengestaltung der der Leuchtdiode 30 zugewandten Seite der optischen Elemente 86, welche das Prinzip der Totalreflexion durch Überschreiten des Grenzwinkels ε_{g} ausnutzt. Die reflektierende Oberfläche der optischen Elemente 86 ist derart mit unterschiedlich geneigten Flächensegmente gestaltet, daß wenigstens ein Teil des von der Leuchtdiode ausgesendeten, auf die Flächensegmente auftreffenden Lichtes mit einem so flachen Winkel auf die Flächensegmente auftrifft, daß es durch diese nicht hindurchtritt, sondern vollständig reflektiert wird. Der Verlauf eines reflektierten Lichtstrahls ist in Fig. 8 mit den Bezugszeichen 88 und 90 gekennzeichnet.

Durch die Anordnung der stabförmigen Sammellinse 84 auf der Höhe der Leuchtdiode 30 und der reflektierenden Elemente 86 über und unter der Sammellinse kann der von der Leuchtvorrichtung erzeugte Lichtvorhang oder Lichtkegel gezielt in vertikaler Richtung gebündelt und in horizontaler Richtung aufgefächert werden, um beispielsweise Abstrahlwinkel in horizontaler Richtung von 110° und in vertikaler Richtung von 10°, gemäß den Anforderungen der StVZO für Fahrradschlußleuchten, zu erzielen. Das oberhalb und unterhalb des vertikalen Abstrahlwinkels V = 10° von der Diode abgestrahlte Licht wird durch die total reflektierenden Elemente 86 nach oben und zur Seite weitergeleitet. Durch eine entsprechende Gestaltung der Sammellinse 84 und der reflektierenden Elemente 86, welche an die Sammellinse 84 angrenzen, kann das Licht in jedem gewünschten Raumwinkel projiziert werden.

Der Fachmann auf dem Gebiet der Optik erkennt unmittelbar, daß Form und Anordnung der Linse und der reflektierenden Elemente je nach gewünschter Lichtverteilung verändert werden können. So kann z.B. eine der Leuchtdiode 30 gegenüber angeordnete runde Sammellinse vorgesehen werden, welche von einem ringförmigen reflektierenden Element umgeben wird. Falls die Leuchtdiode Licht bereits mit im wesentlichen der gewünschten Intensität und dem gewünschten Abstrahlwinkel abgibt, kann die Sammellinse auch weggelassen werden, und bestimmte Teile des Abstrahlbereiches können nur mit einem oder mehreren reflektierenden Elementen 86 ausgeblendet und gegebenenfalls zur Seite oder nach oben abgelenkt werden. Anstelle der Sammellinse oder zusätzlich zu der Sammellinse kann eine Mattierung bestimmter Bereiche der optischen Einrichtung vorgesehen werden, um die Helligkeit des abgegebenen Lichtes zu vermindern und den Abstrahlbereich zu erweitern.

Selbstverständlich muß die beschriebene optische Einrichtung nicht in der Kappe der Schlußleuchte integriert sein, sondern sie kann auf dem Fachmann bekannte Weise innerhalb der Schlußlichtkappe vor die Leuchtdiode geschaltet werden.

Die erfindungsgemäße Leuchtvorrichtung eignet sich besonders, jedoch nicht ausschließlich für Fahrradschlußleuchten. Insbesondere kann auch vorgesehen sein, die erfindungsgemäße Leuchtvorrichtung bei Kraftfahrzeugen, wie Autos oder Motorrädern, einzusetzen, wobei dann vorzugsweise mehrere Leuchtdioden als Lichtquelle in Verbindung mit der oben beschriebenen Optik eingesetzt werden, um die erforderliche Helligkeit zu erzielen.

Die in der vorstehenden Beschreibung, in den Figuren und in den Ansprüchen definierten Merkmale können sowohl einzeln als auch in beliebiger Kombination für die Verwirklichung der Erfindung wesentlich sein.

## Patentansprüche

1. Leuchtvorrichtung für ein Fahrradrücklicht mit einer Leuchtdiode (30) als Lichtquelle, dadurch **gekennzeichnet,** daß nur ein Teilbereich (22) der Manteloberfläche (20) der Leuchtdiode helligkeitsvermindernd behandelt ist und in diesem Bereich die Lichtstrahlung der Leuchtdiode an der Innenseite der Manteloberfläche (20) teilweise reflektiert wird.

2. Leuchtvorrichtung nach Anspruch 1, dadurch **gekennzeichnet,** daß die Manteloberfläche (20) im Bereich (22) des Abstrahlwinkels der Leuchtdiode (30) mattiert ist.

3. Leuchtvorrichtung nach einem der vorangehenden Ansprüche, dadurch **gekennzeichnet,** daß die Leuchtdiode (30) einen kuppelförmigen Mantel (20) aufweist und die Manteloberfläche in einem Bereich (22) etwa ± 5°, gemessen von der Mittelachse (24) der Leuchtdiode, mattiert ist.

4. Leuchtvorrichtung für ein Fahrradrücklicht mit einer Leuchtdiode (30) als Lichtquelle, dadurch **gekennzeichnet,** daß nur über einem Teilbereich der Manteloberfläche der Leuchtdiode (30) eine helligkeitsvermindernde Leuchtdiodenabdeckung angeordnet ist, um die Helligkeit der Leuchtdiode in diesem Bereich zu vermindern und die Lichtstrahlung der Leuchtdiode teilweise zu reflektieren.

5. Leuchtvorrichtung nach einem der vorangehenden Ansprüche, **gekennzeichnet** durch eine stromgesteuerte Ansteuerschaltung (34-40) für die Leuchtdiode (30), welche eine Überstromschutz-Funktion mittels Stromrückkoppelung (34, 36) des Diodenstroms aufweist.

6. Leuchtvorrichtung nach Anspruch 5, dadurch **gekennzeichnet,** daß die Ansteuerschaltung Speichermittel (46) aufweist, die einen Speicherkondensator (46) und eine Entladesperre (54-60) für den Speicherkondensator umfassen.

7. Leuchtvorrichtung nach einem der Ansprüche 1 bis 5, **gekennzeichnet** durch eine batteriegespeiste Ansteuerschaltung (54-60) mit einer Überstromschutz-Funktion und einer Stromregelung derart, daß der der Leuchtdiode (30) zugeführte Strom auch bei abnehmender Batteriespannung konstant bleibt.

8. Leuchtvorrichtung nach einem der vorangehenden Ansprüche, **gekennzeichnet** durch eine im Abstrahlbereich der Leuchtdiode (30) angeordnete optische Einrichtung (84, 86) mit einem optischen Element (86), das eine im wesentlichen vollständige Reflexion des von der Leuchtdiode auf das Element (86) auftreffenden Lichtes durch Überschreiten des Grenzwinkels der Totalreflexion bewirkt.

9. Leuchtvorrichtung nach Anspruch 8, dadurch **gekennzeichnet,** daß die optische Einrichtung (84) und wenigstens ein an die Sammellinse angrenzendes Reflexionselement (86) aufweist, wobei die Sammellinse (84) im Bereich des Abstrahlwinkels der Leuchtdiode (30) angeordnet ist.

10. Leuchtvorrichtung nach Anspruch 8 oder 9, dadurch **gekennzeichnet,** daß die optische Einrichtung in eine Abdeckkappe (78) eines Rücklichtes integriert ist.

11. Fahrradrücklicht mit einer Leuchtvorrichtung nach einem der vorangehenden Ansprüche.

12. Verfahren zum Herstellen einer Leuchtvorrichtung nach einem der Ansprüche 1 bis 10, dadurch **gekennzeichnet,** daß die Manteloberfläche (20) der Leuchtdiode (30) zur Verminderung der Helligkeit teilweise angeschliffen wird.

## Claims

1. A light fitting for a bicycle back light, comprising a light-emitting diode (30) as the light source, characterised in that only a partial zone (22) of the outer surface (20) of the light-emitting diode is treated so as to reduce its brightness and in this zone the light radiation of the light-emitting diode is partially reflected on the inside of the outer surface (20).

2. A light fitting according to claim 1, characterised in that the outer surface (20) is matted in the zone (22) of the radiation angle of the light-emitting diode (30).

3. A light fitting according to any one of the preceding claims, characterised in that the light-emitting diode (30) has a dome-shaped surface (20) and the outer surface is matted in a zone (22) approximately ± 5°, measured from the centre-line (24) of the light-emitting diode.

4. A light fitting for a bicycle back light with a light-emitting diode (30) as the light source, characterised in that a brightness-reducing light-emitting diode cover is disposed only over a partial zone of the outer surface of the light-emitting diode (30) in order to reduce the brightness of the light-emitting diode in this zone and partially reflect the light radiation of the light-emitting diode.

5. A light fitting according to any one of the preceding claims, characterised by a current-controlled control circuit (34 - 40) for the light-emitting diode (30), said circuit comprising an over-current protection function by means of current feedback (34, 36) of the diode current.

6. A light fitting according to claim 5, characterised in that the control circuit comprises storage means (46) which comprise a storage capacitor (46) and a discharge trap (54 - 60) for the storage capacitor.

7. A light fitting according to any one of claims 1 to 5, characterised by a battery-fed control circuit (54 - 60) with an over-current protection function and a current control such that the current fed to the light-emitting diode (30) remains constant even with decreasing battery voltage.

8. A light fitting according to any one of the preceding claims, characterised by an optical device (84, 86) which is disposed in the radiation zone of the light-emitting diode (30) and which has an optical element (86) providing a substantially complete reflection of the light striking the element (86) from the light-emitting diode, this effect being achieved by exceeding the boundary angle of the total reflection.

9. A light fitting according to claim 8, characterised in that the optical device (84) comprises at least one reflection element (86) adjoining the collecting lens, the collecting lens (84) being disposed in the zone of the radiation angle of the light-emitting diode (30).

10. A light fitting according to claim 8 or 9, characterised in that the optical device is integrated in a back light cover cap (78).

11. A bicycle back light with a light fitting according to any one of the preceding claims.

12. A method of making a light fitting according to any one of claims 1 to 10, characterised in that the outer surface (20) of the light-emitting diode (30) is partially ground in order to reduce the brightness.

## Revendications

1. Dispositif d'éclairage pour un feu arrière de bicyclette comportant une diode électroluminescente (30) en tant que source lumineuse, caractérisé en ce que seule une partie (22) de la surface enveloppe (20) de la diode électroluminescente est traitée pour diminuer l'intensité lumineuse et en ce que, à ce niveau, le rayonnement lumineux de la diode électroluminescente est partiellement réfléchi par le côté intérieur de la surface enveloppe (20).

2. Dispositif d'éclairage selon la revendication 1, caractérisé en ce que la surface enveloppe (20) est dépolie, au niveau (22) de l'angle de rayonnement de la diode électroluminescente (30).

3. Dispositif d'éclairage selon l'une quelconque des revendications précédentes, caractérisé en ce que la diode électroluminescente (30) comporte une enveloppe (20) en forme de coupole et en ce que la surface enveloppe est dépolie dans une zone (22) correspondant à un angle de ± 5° par rapport à l'axe central (24) de la diode électroluminescente.

4. Dispositif d'éclairage pour un feu arrière de bicyclette comportant une diode électroluminescente (30) en tant que source lumineuse, caractérisé en ce que la surface enveloppe de la diode électroluminescente (30) comporte, seulement sur une partie, une surface diminuant la luminosité, pour diminuer la luminosité de la diode électroluminescente dans cette zone et pour partiellement refléter le rayonnement de la diode électroluminescente.

5. Dispositif d'éclairage selon l'une quelconque des revendications précédentes, caractérisé par un circuit d'excitation (34-40) commandé en courant pour la diode électroluminescente (30), qui comporte une fonction de limitation de surintensité au moyen d'une contre-réaction (34, 36) du courant de la diode.

6. Dispositif d'éclairage selon la revendication 5, caractérisé en ce que le circuit d'excitation comporte des moyens de mémorisation (46) comprenant un condensateur de stockage (46) et un limiteur de décharge (54, 60) pour le condensateur de stockage.

7. Dispositif d'éclairage selon l'une quelconque des revendications 1 à 5, caractérisé par un circuit d'excitation alimenté par batterie (54, 60) possédant une fonction de protection contre les surintensités et une régulation de courant de manière que le courant fourni à la diode électroluminescente (30) reste constant lorsque la tension de batterie diminue.

8. Dispositif d'éclairage selon l'une quelconque des revendications précédentes, caractérisé par un dispositif optique (84, 86) disposé au niveau de la zone de rayonnement de la diode électroluminescente (30), muni d'un élément optique (86) qui réalise une réflexion pratiquement totale de la lumière provenant sur l'élément (86) à partir de la diode électroluminescente par le dépassement de l'angle limite de réflexion totale.

9. Dispositif d'éclairage selon la revendication 8, caractérisé en ce que le dispositif optique (84) comporte une lentille collectrice et un élément de réflexion adjacent (86), la lentille collectrice (84) étant disposée dans l'angle de rayonnement de la diode électroluminescente (30).

10. Dispositif d'éclairage selon la revendication 8 ou 9, caractérisé en ce que le dispositif optique est intégré dans le capot (78) d'un feu arrière.

11. Feu arrière de bicyclette comprenant un dispositif d'éclairage selon l'une quelconque des revendications précédentes.

12. Procédé pour réaliser un dispositif d'éclairage selon l'une quelconque des revendications 1 à 10, caractérisé en ce que la surface enveloppe (20) de la diode électroluminescente (30) est partiellement meulée pour diminuer l'intensité lumineuse.
